# FASCICULE DE BREVET EUROPEEN

(11) **EP 3 174 652 B1**
(45) Date de publication et mention de la délivrance du brevet: **12.09.2018**
(21) Numéro de dépôt: 15742022.5
(22) Date de dépôt: 24.07.2015
(51) Int. Cl.: B22F 3/105, B29D 30/06, B33Y 10/00, B29C 64/153, B33Y 80/00

(54) **PROCÉDÉ DE FABRICATION ADDITIVE À BASE DE POUDRE D'UNE PIÈCE, NOTAMMENT D'UNE LAMELLE DE GARNITURE POUR MOULE DE PNEUMATIQUES**
PULVERADDITIVVERFAHREN ZUR HERSTELLUNG EINES TEILS, INSBESONDERE EINER LAMELLE ZUR AUSKLEIDUNG EINER REIFENFORM
POWDER ADDITIVE METHOD FOR MANUFACTURING A PART, IN PARTICULAR A SIPE FOR LINING A TYRE MOULD

(30) Priorité: 28.07.2014 FR 1457259
(43) Date de publication de la demande: 07.06.2017
(73) Titulaire: Compagnie Générale des Etablissements Michelin, 63000 Clermont-Ferrand (FR)
(72) Inventeur: DESVIGNES, Jean-Claude, F-63040 Clermont-Ferrand Cedex 09 (FR); PAYS, Pierre, F-63040 Clermont-Ferrand Cedex 09 (FR); LEBLAY, Damien, F-63040 Clermont-Ferrand Cedex 09 (FR); GOMET, Christian, F-63040 Clermont-Ferrand Cedex 09 (FR); REEB, Alexandre, F-63040 Clermont-Ferrand Cedex 09 (FR)
(74) Mandataire: Barascou, Frédéric
(86) Numéro de dépôt international: PCT/EP2015/067041
(87) Numéro de publication internationale: WO 2016/016136

(56) Documents cités:
- EP-A1- 0 868 955
- FR-A1- 2 961 741
- FR-A1- 2 991 613
- US-A- 5 155 324
- US-A1- 2004 031 780
- US-A1- 2006 236 544

## Description

La présente invention concerne un procédé de fabrication additive à base de poudre par frittage ou par fusion de grains de ladite poudre à l'aide d'un faisceau énergétique. Par « faisceau énergétique », on entend un rayonnement électromagnétique (par exemple un faisceau laser) ou un faisceau de particules (par exemple un faisceau d'électrons).

Une application particulièrement intéressante de l'invention concerne la fabrication d'éléments de garniture, tels que des lamelles, d'un moule de cuisson ou vulcanisation du type à secteurs pour pneumatiques de véhicules.

Ce type de moule comprend principalement deux coquilles assurant chacune le moulage d'un des flancs latéraux du pneumatique, une pluralité de secteurs assurant le moulage de la bande de roulement dudit pneumatique et mobiles radialement entre une position d'ouverture et une position de fermeture du moule. Les coquilles et les secteurs définissent un espace intérieur destiné à être mis en contact avec l'ébauche du pneumatique non vulcanisée. Pour former les sculptures de la bande de roulement, des lamelles sont fixées sur les secteurs du moule et s'étendent en saillie dans cet espace intérieur. Pour plus de détails sur un moule comprenant de telles lamelles, on pourra par exemple se référer aux documents EP-B1-1 758 743 et US-A1-2002/0139164.

L'intérêt de la fabrication par fusion sélective de couches de poudre superposées, plus communément nommé frittage, réside principalement dans le fait que la forme de ces lamelles peut être modélisée par ordinateur et que les lamelles peuvent ensuite être fabriquées sur la base de cette modélisation par pilotage du faisceau énergétique par l'ordinateur. En outre, cette technique est bien adaptée à la fabrication d'éléments de petites dimensions et de formes complexes, tels que les lamelles de garniture de moule, qui sont difficiles à fabriquer avec d'autres procédés.

Lorsque la fusion sélective est réalisée par un faisceau laser, on parle de frittage laser. La technique de frittage laser consiste à fabriquer la lamelle couche après couche, en empilant les couches de poudre consolidées et fusionnées les unes sur les autres par le faisceau laser selon une direction d'empilage. On entend par « poudre », une poudre ou un mélange de poudres. La poudre peut par exemple être métallique ou minérale, par exemple céramique.

Classiquement, pour assurer la préparation du lit de poudre préalablement à l'opération de frittage ou de la fusion, il est utilisé un dispositif de mise en couche. Un tel dispositif comprend principalement des moyens de stockage de la poudre et des moyens de répartition aptes à répartir sur un plateau de fabrication la poudre en une couche. Pour plus de détails sur de tels dispositifs de mise en couche, on pourra par exemple se référer à la demande de brevet WO-A2-2013/178825.

La première couche est déposée puis soudée directement sur le plateau de fabrication. Les autres couches sont ensuite formées successivement de manière à obtenir un empilage à partir de la première couche.

Généralement, la fabrication d'un élément de petite dimension, tel qu'une lamelle de garniture, s'effectue horizontalement sur le plateau de fabrication de sorte que sa longueur est sensiblement parallèle au plateau de fabrication. On parle alors d'une fabrication de type horizontale. Ceci permet d'éviter d'avoir une hauteur de lamelle trop importante et de réduire ainsi le temps de fabrication.

Toutefois, avec un tel type de fabrication, des problèmes de non-respect des caractéristiques dimensionnelles et géométriques peuvent se poser. En effet, les lamelles peuvent présenter des ondulations ou encore des parties massives créant des zones dites en contre-dépouille, c'est-à-dire des zones où une paroi de lamelle est en surplomb au-dessus d'une zone de poudre non solidifiée. De telles parties massives sont par exemple prévues sur les lamelles décrites dans les demandes de brevet FR-A1-2 961 741 et WO-A1-2010/030276. Dans ces zones en contre-dépouille des lamelles, on observe des déformations, des phénomènes de concentration de contraintes pouvant générer des fissures et une rugosité particulièrement élevée. Par ailleurs, certaines géométries de lamelles ne peuvent être fabriquées à cause de telles zones en contre-dépouille.

On connait également par le document US 2006/0236544 un procédé de fabrication par frittage laser dans lequel des tronçons de conduit sont fabriqués simultanément sur un plateau.

La présente invention vise à remédier aux inconvénients précités.

Plus particulièrement, la présente invention vise à prévoir un procédé de fabrication additive d'au moins une pièce par frittage ou fusion de poudre à l'aide d'au moins un faisceau énergétique qui permet de garantir la fabrication satisfaisante de pièces de formes complexes pouvant par exemple présenter des ondulations et/ou des parties massives et/ou en contre-dépouille.

Dans un mode de mise en oeuvre, le procédé concerne la fabrication additive d'au moins une pièce par frittage ou fusion de poudre à l'aide d'au moins un faisceau énergétique. La pièce comprend un corps principal pourvu de deux faces frontales opposées et une tête monobloc prolongeant une extrémité du corps, s'étendant parallèlement à la longueur dudit corps et en saillie au moins par rapport à l'une desdites faces frontales.

Le procédé comprend les étapes suivantes:
- a) déposer au moins une couche de poudre sur une surface de travail à l'aide d'un dispositif de mise en couche comprenant des moyens de répartition de la poudre mobiles en translation le long de ladite surface,
- b) fusionner au moins en partie ladite couche déposée à l'aide du faisceau énergétique, et
- c) répéter les étapes a) et b) pour former la pièce par empilage de couches fusionnées de la pièce. Les moyens de répartition dudit dispositif sont mobiles selon une direction sensiblement parallèle à la direction de la longueur de chaque couche fusionnée. Les étapes a) et b) sont répétées pour former la pièce de sorte que la longueur de ladite pièce s'étend selon une direction sensiblement
   parallèle à la direction d'empilage des couches fusionnées, et que la tête de la pièce est orientée sensiblement perpendiculairement à la surface de travail.

On entend ici par « longueur », la dimension de la pièce dans le sens de sa plus grande étendue.

L'orientation des couches fusionnées relativement à la direction de déplacement des moyens de répartition permet de limiter le risque de déformations des couches empilées sous l'effet des efforts appliqués par ces moyens pouvant provoquer l'apparition de concentrations de contraintes et de microfissures.

En outre, avec cette fabrication de type verticale, l'obtention de pièces de formes complexes respectant les caractéristiques dimensionnelles, géométriques et d'état de surface requises est facilitée. Pour une pièce comprenant des parties massives, les déformations, voire les microfissures, liées aux contraintes internes générées dans la pièce par diffusion de chaleur lors des étapes de fusion sont atténuées compte tenu de l'orientation des parties massives perpendiculairement à la surface de travail, ces parties massives étant reliées à ladite surface. Pour une pièce comprenant des parties en contre-dépouille orientées perpendiculairement à la surface de travail, la rugosité n'est pas élevée contrairement à une fabrication de type horizontale dans laquelle les parties en contre-dépouille reposent sur les couches de poudre non fusionnées générant des aspérités grossières sur la pièce.

Dans un mode de mise en oeuvre préféré, une pluralité d'empilages de couches fusionnées est formée dans des zones distinctes de la surface de travail de sorte à fabriquer simultanément une pluralité de pièces. Lesdites pièces peuvent être agencées sur la surface de travail suivant une matrice de colonnes disposées transversalement par rapport à la direction de déplacement des moyens de répartition du dispositif de mise en couche, et de lignes disposées parallèlement à ladite direction.

Les moyens de répartition du dispositif de mise en couche peuvent être communs à la pluralité d'empilages de couches fusionnées.

Dans un mode de mise en oeuvre, les pièces de chaque colonne et de chaque ligne sont alignées les unes relativement aux autres. Alternativement, chaque pièce d'une colonne est décalée selon la direction de déplacement des moyens de répartition par rapport à la pièce immédiatement adjacente de ladite colonne.

Avantageusement, la longueur de la pièce s'étend selon une direction formant un angle comprise entre -20° et +20° avec la direction d'empilage des couches.

Dans le mode de mise en oeuvre selon l'invention, la pièce est orientée de sorte que les moyens de répartition du dispositif de mise en couche appuient d'abord sur le corps principal puis ensuite sur la tête de ladite pièce lors de leur déplacement.

Dans un mode de mise en oeuvre, les moyens de répartition du dispositif de mise en couche comprennent au moins un rouleau. De préférence, l'axe du rouleau est orienté sensiblement perpendiculairement à la direction de la longueur de chaque couche fusionnée de la pièce. Ladite pièce peut présenter globalement une forme rectangulaire.

D'autres buts, caractéristiques et avantages apparaîtront à la lecture de la description détaillée suivante donnée uniquement en tant qu'exemple non limitatif et faite en référence aux dessins annexés sur lesquels :
- la figure 1 est une vue schématique en perspective illustrant partiellement un procédé de fabrication de lamelles par frittage laser selon un premier exemple de mise en oeuvre,
- la figure 2 est une vue de détail de deux lamelles de la figure 1, et
- les figures 3 et 4 sont des vues de détail de deux lamelles selon des deuxième et troisième exemples de mise en oeuvre du procédé.

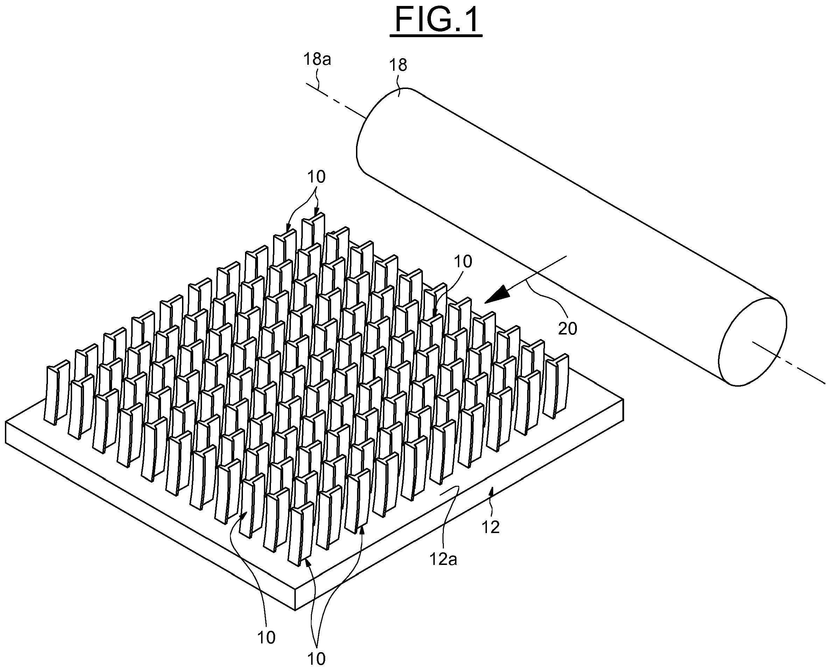

Sur la figure 1, on a représenté un agencement de lamelles 10 identiques qui sont destinées à un moule de vulcanisation pour pneumatiques et formées sur un plateau de fabrication 12 représenté dans une position supposée horizontale. Le plateau 12 comprend une surface supérieure formant une surface de travail 12a sur laquelle sont formées les lamelles 10. Les lamelles 10 sont identiques entre elles.

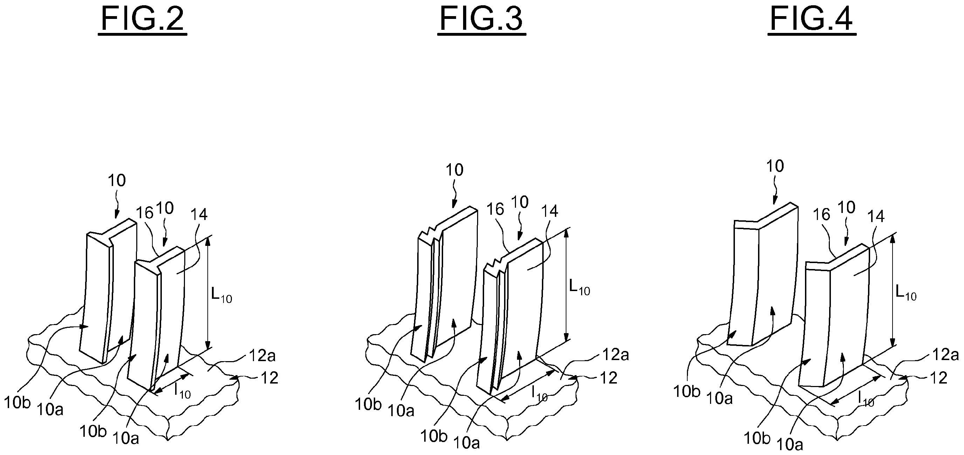

Comme illustré plus visiblement à la figure 2, chaque lamelle 10 présente une forme générale sensiblement rectangulaire de longueur L₁₀ et de largeur l₁₀. La longueur L₁₀ de la lamelle s'étend sensiblement perpendiculairement par rapport à la surface de travail 12a du plateau de fabrication, i.e. ici sensiblement verticalement. Les lamelles 10 sont orientées ou s'étendent sensiblement verticalement. Les lamelles 10 s'étendent longitudinalement selon une direction sécante à la surface de travail 12a.

La lamelle 10 présente ici une forme courbe. Dans l'exemple de réalisation illustré, chaque lamelle 10 comprend un corps 10a principal et une tête 10b monobloc avec ledit corps. Le corps 10a comprend deux faces frontales 14, 16 principales opposées et deux faces d'extrémité (non référencées) latérales opposées délimitant lesdites faces frontales. Les faces frontales 14, 16 délimitent l'épaisseur du corps 10a de la lamelle. Dans l'exemple de réalisation illustré, les faces principales 14, 16 sont sensiblement planes.

La tête 10b prolonge une extrémité du corps 10a et s'étend parallèlement à la longueur dudit corps. La tête 10b prolonge une des faces d'extrémité du corps. La tête 10b s'étend en saillie latéralement de part et d'autre du corps 10a. La tête 10b s'étend en saillie par rapport aux faces principales 14, 16. La tête 10b présente une partie plus massive que le corps 10a principal. La tête 10b présente ici une forme sensiblement cylindrique à section triangulaire. En variante, la section de la tête pourrait avoir toute autre forme par exemple rectangulaire, carré, circulaire, etc., ou encore en V ou en U. La lamelle 10 est apte à permettre le moulage d'une sculpture de type goutte d'eau dans la bande de roulement du pneumatique. Plus précisément, la partie inférieure du corps 10a est destinée à être ancrée dans un secteur du moule de vulcanisation du pneumatique, tandis que la partie supérieure du corps 10a et la tête 10b sont destinées à venir en saillie au-dessus de la surface de moulage du secteur du moule pour le moulage de la sculpture dans la bande de roulement du pneumatique.

Pour la fabrication de la pluralité de lamelles 10, on procède de la manière suivante. Dans une première étape, on dépose une première couche de poudre sur la surface de travail 12a du plateau de fabrication. Après dépose, la première couche s'étend sensiblement horizontalement sur la surface de travail 12a. La poudre peut par exemple être métallique ou minérale, par exemple céramique.

L'ensemble des moyens permettant l'application d'une couche de poudre sur la surface de travail 12a du plateau de fabrication est appelé dispositif de mise en couche. Le dispositif de mise en couche comprend un rouleau 18 de répartition de la poudre sur la surface de travail 12a. Le rouleau 18 a pour fonction de répartir sur la surface de travail 12a une mince épaisseur de poudre. Le rouleau 18 comprend un axe 18a de rotation et est mobile à rotation autour dudit axe. Chaque lamelle 10 est orientée perpendiculairement à l'axe 18a du rouleau des moyens de répartition.

Le dispositif de mise en couche peut également comprendre des moyens de stockage de la poudre alimentant le rouleau. Le dispositif peut encore comprendre, en combinaison ou en remplacement du rouleau 18, un autre moyen de répartition par exemple une raclette. Le dispositif peut encore comprendre un rouleau de compactage mobile conjointement avec le moyen de répartition pour rendre encore plus homogène l'épaisseur de la poudre répartie.

Lors de cette étape de dépose de la première couche sur le plateau de fabrication 12, les moyens de répartition du dispositif de mise en couche sont mobiles en translation le long de la surface de travail 12a selon une direction d'avance ou de déplacement illustrée schématiquement par la flèche référencée 20. Les moyens de répartition se déplacent sensiblement parallèlement à la surface de travail 12a du plateau.

Dans une seconde étape, une source énergétique (non représentée) par exemple du type laser, émet un faisceau laser dont l'orientation est contrôlée par des miroirs galvanométriques (non représentés). Une lentille optique (non représentée) permet de focaliser le faisceau laser afin de chauffer la couche de poudre selon un motif correspondant à la section de la lamelle à fabriquer, et ainsi réaliser de manière sélective la fusion de la poudre, et ce, dans chaque zone du plateau de fabrication 12 sur laquelle doit être fabriquée une lamelle 10.

Lors d'une troisième étape, après l'étape de traitement par laser, une seconde couche est déposée sur la première couche de poudre qui est en partie fusionnée. Les moyens de répartition du dispositif de mise en couche se déplacent sensiblement parallèlement à la direction de la plus grande dimension de chaque section fusionnée de lamelle en cours de fabrication. Ensuite, la fusion sélective de la seconde couche de poudre est réalisée. Ces étapes sont à nouveau répétées pour former par empilage de couches les lamelles 10. Les couches fusionnées de chaque lamelle 10 s'étendent sensiblement horizontalement et sont empilées les unes sur les autres selon une direction d'empilage sensiblement verticale.

Comme indiqué précédemment, la longueur L₁₀ de chaque lamelle 10 fabriquée s'étend sensiblement verticalement par rapport à la surface de travail 12a du plateau. La fabrication des lamelles 10 est de type verticale. La longueur L₁₀ s'étend sensiblement parallèlement à la direction d'empilage. La longueur de la lamelle fabriquée peut s'étendre selon une direction formant un angle compris entre -20° et + 20° avec la direction d'empilage. La longueur du corps 10a principal de la lamelle s'étend sensiblement verticalement à partir de la surface de travail 12a du plateau. La tête 10b de la lamelle s'étend également sensiblement verticalement à partir de la surface de travail 12a du plateau. La tête 10b en saillie par rapport aux faces frontales 14, 16 s'étend sensiblement perpendiculairement par rapport à la surface de travail 12a. Ainsi, la lamelle 10 est dépourvue de zones en contre-dépouille, i.e. de zones où une partie de la lamelle est verticalement en surplomb au-dessus d'une zone de poudre non solidifiée.

La direction de déplacement 20 des moyens de répartition du dispositif de mise en couche est sensiblement parallèle à la largeur l₁₀ de chaque lamelle 10 formée. La direction de déplacement 20 est sensiblement parallèle à la direction de la plus grande dimension de la section transversale de chaque lamelle 10. Pour une lamelle 10, la direction de déplacement 20 est parallèle à la longueur de chaque couche fusionnée de l'empilage.

Grâce à l'orientation des couches fusionnées pour la fabrication de chaque lamelle 10 par rapport à la direction de déplacement 20 des moyens de répartition du dispositif de mise en couche, le risque de déformations, notamment par flexion, pouvant provoquer l'apparition de phénomènes de concentrations de contraintes et de micro fissures est limité lors du passage de ces moyens sur chaque couche. En outre, cette orientation permet d'obtenir un bon encaissement des efforts appliqués par les moyens de répartition avec cette fabrication de type verticale de la lamelle. Avec ce type de fabrication, l'obtention de pièces de formes complexes respectant les caractéristiques dimensionnelles, géométriques et d'état de surface requises est facilitée.

Ainsi, pour la majorité de lamelles 10, il n'est pas nécessaire de prévoir la formation de renforts se présentant sous forme de surépaisseurs venues de matière avec la lamelle. A titre indicatif, avec de telles lamelles, des renforts latéraux peuvent être prévus seulement pour une longueur de lamelle supérieure ou égale à 30 mm et une épaisseur de l'ordre de 0.4 mm, ou encore pour les lamelles courbes présentant un décalage supérieure à 5 mm entre les extrémité supérieure et inférieure.

Par ailleurs, chaque lamelle 10 est orientée de sorte que les moyens de répartition du dispositif de mise en couche appuient d'abord sur le corps principal 10a puis ensuite sur la tête 10b lors de leur déplacement selon la direction 20.

Ceci permet une augmentation progressive des frottements entre le rouleau du dispositif de mise en couche et les lamelles 10 en cours de fabrication. En effet, si le rouleau passe d'abord sur les têtes 10b des lamelles et ensuite sur leurs corps 10a, le rouleau subit brusquement d'importants frottements, ce qui peut conduire à endommager les lamelles 10 fabriquées et éventuellement à bloquer le rouleau et donc provoquer l'arrêt de la machine.

Comme illustré à la figure 1, après fabrication, les lamelles 10 sont agencées sur le plateau 12 suivant une matrice de colonnes et de lignes parallèles qui sont disposées respectivement transversalement et parallèlement à la direction de déplacement 20 des moyens de répartition du dispositif de mise en couche. Dans l'exemple de réalisation illustré, les lamelles 10 de chaque colonne et de chaque rangée sont fabriquées de sorte à être alignées les unes relativement aux autres. En variante, il est possible de prévoir la fabrication des lamelles 10 de sorte à ce que, pour une ou pour chaque colonne, chaque lamelle soit décalée selon le sens de déplacement des moyens de répartition par rapport à la lamelle immédiatement adjacente. Une telle disposition permet d'éviter une détérioration des lamelles en cours de fabrication en cas de frottement excessifs des moyens de répartition sur les premières lamelles en contact avec le rouleau. Après fabrication, les lamelles sont désolidarisées du plateau de fabrication, par exemple par découpe par électro-érosion par fil.

Dans l'exemple de réalisation illustré, les lamelles 10 présentent une forme générale rectangulaire et sont conçues pour permettre le moulage d'une sculpture de type goutte d'eau étant donné la forme des têtes 10b constituant les parties de moulage de ces lamelles.

En variante, il est possible de fabriquer des lamelles 10 comprenant chacune une tête 10b présentant d'autres formes, par exemple une tête 10b ondulée comme cela est représenté à la figure 3. De façon analogue au premier exemple de réalisation illustré, la tête 10b s'étend en saillie latéralement de part et d'autre du corps 10a. La tête 10b s'étend en saillie par rapport aux faces principales 14, 16.

Dans une autre variante, il est encore possible de fabriquer des lamelles 10 comprenant chacune une tête 10b inclinée par rapport au corps 10a comme cela est illustré à la figure 4. Dans cet exemple de réalisation, la tête 10b s'étend en saillie uniquement par rapport à la face principale 16. La conception des têtes 10b des lamelles est déterminée selon le type de sculpture à former dans la bande de roulement. Chaque tête 10b peut offrir au moins une forme en contre-dépouille et/ou une forme plus massive que le corps 10a.

L'invention a été décrite sur la base d'une fabrication par frittage laser d'une lamelle pour moule de vulcanisation de pneumatiques. L'invention peut également être appliquée à autre élément de garniture du moule destiné à être rapporté sur un bloc support du moule, ou plus généralement à d'autres types de pièces de petites dimensions utilisées dans des applications différentes.

## Revendications

1. Procédé de fabrication additive d'au moins une pièce par frittage ou fusion de poudre à l'aide d'au moins un faisceau énergétique, ladite pièce comprenant un corps principal pourvu de deux faces frontales opposées et une tête monobloc prolongeant une extrémité du corps, s'étendant parallèlement à la longueur dudit corps et en saillie au moins par rapport à l'une desdites faces frontales, ledit procédé comprenant les étapes suivantes:
- a) déposer au moins une couche de poudre sur une surface de travail à l'aide d'un dispositif de mise en couche comprenant des moyens de répartition de la poudre mobiles en translation le long de ladite surface, et
- b) fusionner au moins en partie ladite couche déposée à l'aide du faisceau énergétique,
- c) répéter les étapes a) et b) pour former la pièce par empilage de couches fusionnées, ledit procédé étant **caractérisé en ce que** :
- les moyens de répartition dudit dispositif sont mobiles selon une direction sensiblement parallèle à la direction de la longueur de chaque couche fusionnée de la pièce,
- les étapes a) et b) sont répétées pour former la pièce de sorte que la longueur de ladite pièce s'étend selon une direction sensiblement parallèle à la direction d'empilage des couches fusionnées et que la tête de la pièce est orientée sensiblement perpendiculairement à la surface de travail, et
- la pièce est orientée de sorte que les moyens de répartition du dispositif de mise en couche appuient d'abord sur le corps principal puis ensuite sur la tête de ladite pièce lors de leur déplacement.

2. Procédé selon la revendication 1, dans lequel une pluralité d'empilages de couches fusionnées est formée dans des zones distinctes de la surface de travail de sorte à fabriquer simultanément une pluralité de pièces.

3. Procédé selon la revendication 2, dans lequel la pluralité de pièces est agencée sur la surface de travail suivant une matrice de colonnes disposées transversalement par rapport à la direction de déplacement des moyens de répartition du dispositif de mise en couche, et de lignes disposées parallèlement à ladite direction.

4. Procédé selon la revendication 2 ou 3, dans lequel les moyens de répartition du dispositif de mise en couche sont communs à la pluralité d'empilages de couches fusionnées.

5. Procédé selon la revendication 3 ou 4, dans lequel les pièces de chaque colonne et de chaque ligne sont alignées les unes relativement aux autres.

6. Procédé selon la revendication 3 ou 4, dans lequel chaque pièce d'une colonne est décalée selon la direction de déplacement des moyens de répartition par rapport à la pièce immédiatement adjacente de ladite colonne.

7. Procédé selon l'une quelconque des revendications précédentes, dans lequel la longueur de la pièce s'étend selon une direction formant un angle compris entre -20° et +20° avec la direction d'empilage des couches.

8. Procédé selon l'une quelconque des revendications précédentes, dans lequel les moyens de répartition du dispositif de mise en couche comprennent au moins un rouleau.

9. Procédé selon la revendication 8, dans lequel l'axe du rouleau est orienté sensiblement perpendiculairement à la direction de la longueur de chaque couche fusionnée de la pièce.

10. Procédé selon l'une quelconque des revendications précédentes, dans lequel la pièce présente globalement une forme rectangulaire

## Patentansprüche

1. Additives Herstellungsverfahren mindestens eines Teils durch Sintern oder Schmelzen eines Pulvers mit Hilfe von mindestens einem Energiestrahl, wobei das Teil einen Hauptkörper aufweist, der mit zwei gegenüberliegenden Stirnflächen und einem einteiligen Kopf ausgestattet ist, der ein Ende des Körpers verlängert, der sich parallel zu der Länge des Körpers und vorstehend in Bezug auf eine der Stirnflächen erstreckt, wobei das Verfahren die folgenden Schritte aufweist:
- a) Auftragen von mindestens einer Pulverschicht auf einer Arbeitsfläche mit Hilfe von einer Vorrichtung zum Beschichten, die Mittel zum Verteilen des Pulvers aufweist, die entlang der Oberfläche translatorisch beweglich sind, und
- b) mindestens teilweises Schmelzen der aufgetragenen Schicht mit Hilfe des Energiestrahls,
- c) Wiederholen der Schritte a) und b), um das Teil durch Aufeinanderschichten der geschmolzenen Schichten zu bilden, wobei das Verfahren **dadurch gekennzeichnet ist, dass**:
- die Mittel zum Verteilen der Vorrichtung in einer Richtung beweglich sind, die im Wesentlichen parallel zu der Richtung der Länge von jeder geschmolzenen Schicht des Teils ist,
- die Schritte a) und b) wiederholt werden, um das Teil derart zu bilden, dass sich die Länge des Teils in einer Richtung erstreckt, die im Wesentlichen parallel zu der Richtung des Aufeinanderschichtens der geschmolzenen Schichten ist und dass der Kopf des Teils im Wesentlichen senkrecht zu der Arbeitsfläche ausgerichtet ist, und
- das Teil derart ausgerichtet wird, dass die Mittel zum Verteilen der Vorrichtung zum Beschichten bei ihrem Verschieben zunächst auf dem Hauptkörper und dann auf dem Kopf des Teils aufliegen.

2. Verfahren nach Anspruch 1, wobei mehrere Aufeinanderschichtungen von geschmolzenen Schichten in verschiedenen Bereichen der Arbeitsfläche derart gebildet werden, um gleichzeitig mehrere Teile herzustellen.

3. Verfahren nach Anspruch 2, wobei die mehreren Teile auf der Arbeitsfläche nach einer Matrix von Spalten, die in Bezug auf die Richtung der Verschiebung der Mittel zum Verteilen der Vorrichtung zum Beschichten quer angeordnet sind, und von Zeilen, die parallel zu der Richtung angeordnet sind, ausgebildet werden.

4. Verfahren nach Anspruch 2 oder 3, wobei die Mittel zum Verteilen der Vorrichtung zum Beschichten den mehreren Aufeinanderschichtungen von geschmolzenen Schichten gemeinsam sind.

5. Verfahren nach Anspruch 3 oder 4, wobei die Teile von jeder Spalte und von jeder Zeile relativ zueinander ausgerichtet sind.

6. Verfahren nach Anspruch 3 oder 4, wobei jedes Teil einer Spalte in der Richtung der Verschiebung der Mittel zum Verteilen in Bezug auf das unmittelbar angrenzende Teil der Spalte versetzt ist.

7. Verfahren nach einem der vorhergehenden Ansprüche, wobei sich die Länge des Teils in einer Richtung erstreckt, die einen Winkel, der zwischen -20° und +20° beträgt, mit der Richtung des Aufeinanderschichtens der Schichten bildet.

8. Verfahren nach einem der vorhergehenden Ansprüche, wobei die Mittel zum Verteilen der Vorrichtung zum Beschichten mindestens eine Walze aufweisen.

9. Verfahren nach Anspruch 8, wobei die Achse der Walze im Wesentlichen senkrecht zu der Richtung der Länge von jeder geschmolzenen Schicht des Teils ausgerichtet ist.

10. Verfahren nach einem der vorhergehenden Ansprüche, wobei das Teil im Wesentlichen eine rechteckige Form aufweist.

## Claims

1. Process for the additive manufacturing of at least one part by powder sintering or melting using at least one beam of energy, said part comprising a main body provided with two opposite frontal faces and a one-piece head prolonging one end of the body, extending parallel to the length of said body and jutting out at least with respect to one of said frontal faces, said process comprising the following steps:
- a) depositing at least one layer of powder on a working surface using a layering device comprising translatably mobile means for distributing the powder along said surface, and
- b) at least partly fusing said layer deposited using the beam of energy,
- c) repeating steps a) and b) in order to form the part by stacking of fused layers, said process being **characterized in that**:
- the distribution means of said device are mobile in a direction substantially parallel to the direction of the length of each fused layer of the part,
- steps a) and b) are repeated in order to form the part so that the length of said part extends along a direction substantially parallel to the stacking direction of the fused layers and so that the head of the part is oriented substantially perpendicular to the working surface, and
- the part is oriented so that the distribution means of the layering device bear firstly against the main body then next against the head of said part during the displacement thereof.

2. Process according to Claim 1, in which a plurality of stacks of fused layers is formed in different zones of the working surface so as to simultaneously manufacture a plurality of parts.

3. Process according to Claim 2, in which the plurality of parts is arranged on the working surface as a matrix of columns positioned transversely relative to the displacement direction of the distribution means of the layering device, and of rows positioned parallel to said direction.

4. Process according to Claim 2 or 3, in which the distribution means of the layering device are shared by the plurality of stacks of fused layers.

5. Process according to Claim 3 or 4, in which the parts of each column and of each row are aligned relative to one another.

6. Process according to Claim 3 or 4, in which each part of a column is offset along the displacement direction of the distribution means relative to the immediately adjacent part of said column.

7. Process according to any one of the preceding claims, in which the length of the part extends along a direction forming an angle of between -20° and +20° with the stacking direction of the layers.

8. Process according to any one of the preceding claims, in which the distribution means of the layering device comprise at least one roller.

9. Process according to Claim 8, in which the axis of the roller is oriented substantially perpendicular to the direction of the length of each fused layer of the part.

10. Process according to any one of the preceding claims, in which the part generally has a rectangular shape.
